# EUROPÄISCHE PATENTSCHRIFT

(11) **EP 2 962 824 B1**
(45) Veröffentlichungstag und Bekanntmachung des Hinweises auf die Patenterteilung: **25.09.2019**
(21) Anmeldenummer: 15002001.4
(22) Anmeldetag: 03.07.2015
(51) Int. Cl.: B29B 7/38, B29B 7/60, B29B 7/88, B29B 17/00, B29C 31/06, C08J 11/06, B29C 48/285, B29B 7/40, B29B 7/42, B29B 7/90, B29B 9/06, B29B 9/14, B29K 105/06, B29C 48/30, B29C 48/39, B29C 48/04, B29C 48/345, B29C 48/92

(54) **VERFAHREN ZUM AUFBEREITEN EINES FASERN ENTHALTENDEN WERKSTOFFS**
METHOD FOR CONDITIONING A MATERIAL CONTAINING FIBRES
PROCEDE DE PREPARATION D'UNE MATIERE CONTENANT DES FIBRES

(30) Priorität: 04.07.2014 DE 102014009883
(43) Veröffentlichungstag der Anmeldung: 06.01.2016
(73) Patentinhaber: WIPAG Deutschland GmbH, 86633 Neuburg a.d. Donau (DE)
(72) Erfinder: WIEDEMANN, Peter, 86633 Neuburg (DE)
(74) Vertreter: Witzany, Manfred

(56) Entgegenhaltungen:
- EP-A1- 0 395 128
- EP-A1- 0 643 093
- DE-A1- 10 012 532
- DE-A1- 10 155 615
- DE-A1- 10 214 654
- FR-A1- 2 564 374
- US-A1- 2004 075 187
- US-A1- 2008 128 933

## Beschreibung

Die Erfindung betrifft ein Verfahren zum Aufbereiten eines Fasern enthaltenden Werkstoffs, das mit einem thermoplastischen Polymer vermischt und in einem Extruder erhitzt und gepresst wird.

Aus der DE 44 08 089 A1 ist ein Verfahren zur Wiederaufbereitung eines Faser verstärkten thermoplastischen Materials bekannt. Dabei werden zwei verschiedene mit Glasfasern verstärkte thermoplastische Polymere vermischt. Das erste thermoplastische Polymer enthält dabei kurze Glasfasern mit einer Länge zwischen 10 Mikrometer und 400 Mikrometer, während das zweite thermoplastische Polymer lange Glasfasern zwischen 10 mm und 20 mm enthält. Diese beiden Polymere werden vermischt und aufgeschmolzen. Anschließend wird das Gemisch thermoplastisch verformt. Aus der EP 0 751 828 B1 ist ein gattungsgemäßes Verfahren zur Herstellung von Formteilen bekannt. Dabei werden mit Verstärkungsfasern verstärkte thermoplastische Polymere einer Extruderschnecke zugeführt und durch Erhöhung von Druck und Temperatur in einen plastifizierten Zustand versetzt. Hierdurch wird das Material umgeformt, um ein Spritzgussformteil herzustellen. Dieses Verfahren hat sich in der Praxis bewährt und bildet den Ausgangspunkt der vorliegenden Erfindung.

Aus der EP 0 395 128 A1 ist ein Verfahren zum Aufbereiten eines Fasern enthaltenden Polymers bekannt. Dabei wird das Polymer zu einem feinen Pulver gemahlen und in einen Extruder zusammen mit weiteren Stoffen dosiert. In diesem Extruder wird das Polymer aufgeschmolzen und umgeformt, um hieraus ein Granulat zu formen, welches durch Abkühlen erstarrt. Durch das Mahlen des Ausgangsstoffes zu einem feinen Pulver ist dieser Ausgangsstoff problemlos fließfähig, so dass beim Dosieren des Massenstroms keinerlei Probleme entstehen.

Aus der US 2008/0128933 A1 ist ein Verfahren zum Recyceln von Teppichen bekannt. Bei diesem Verfahren werden Teppiche zu kurzen Fasern geschnitten und zusammen mit einem Polymergranulat einem Extruder zugeführt. In diesem Extruder wird das Polymergranulat umgeformt, um ein faserverstärktes Granulat zu erzeugen, welches anschließend durch Abkühlen erstarrt. Bei diesem Verfahren liegen die Fasern ungebunden vor, so dass sie auch bei Längen im Zentimeterbereich fließfähig sind. Damit stellt das Dosieren der einzelnen Massenströme keine besonderen Herausforderungen dar.

Aus der DE 101 55 615 A1 ist ein Verfahren zum Recyceln von Altbauteilen aus faserverstärkten Thermoplasten bekannt. Bei diesem Verfahren werden die Altbauteile soweit zerkleinert, dass ein fließfähiges Material entsteht, welches mit kontinuierlich arbeitenden Dosierpumpen einem Extruder zusammen mit weiteren Stoffen, insbesondere Frischpolymer zugeführt wird. Auch bei diesem Verfahren stellt die Dosierung der einzelnen Massenströme keine besonderen Anforderungen, da alle Materialien fließfähig sind.

Der Erfindung liegt die Aufgabe zugrunde, ein Verfahren der eingangs genannten Art zu schaffen, welches einen qualitativ hochwertigen faserverstärkten thermoplastischen Polymercompound ergibt.

Diese Aufgabe wird mit den folgenden Merkmalen gelöst.

Bei dem erfindungsgemäßen Verfahren gemäss Anspruch 1 zum Aufbereiten eines Fasern enthaltenden Werkstoffs wird dieser in Portionen geteilt. Als Werkstoff kommen insbesondere Einzelfasern, Faserbündel, Fasermatten, Fasergelege und faserverstärkte thermoplastische Polymere in Betracht. Diese Aufzählung ist jedoch nicht abschließend zu verstehen. Diese Portionen werden gewogen und in vorbestimmten Taktzeiten einem Materialstrom mindestens eines thermoplastischen Polymers und ggf. weitere Zusatzstoffe zugeführt. Dabei werden die Taktzeiten so gewählt, dass sie direkt proportional zum ermittelten Gewicht der einzelnen Portionen sind. Für den Fall, dass die Portionen im Wesentlichen das gleiche Gewicht aufweisen, sind die Taktzeiten ebenfalls gleich. Bei wesentlich unterschiedlichen Gewichten der einzelnen Portionen werden dagegen die Taktzeiten entsprechend dem Gewicht angepasst. Auf diese Weise wird erreicht, dass im Mittel der Materialstrom eine konstante Masse pro Zeit an Fasern enthaltendem Werkstoff aufweist. Dieses Verfahren ist insbesondere unabhängig von der Größe der Materialstücke des Fasern enthaltenden Werkstoffs, da es auf dessen Riesel- und Fließfähigkeiten nicht ankommt. Damit können auch recht große Stücke des Fasern enthaltenden Werkstoffs verarbeitet werden, die folglich entsprechend lange Fasern enthalten. Die Materialstücke müssen lediglich so klein bemessen sein, dass sie von einer Extruderschnecke förderbar sind. Damit ist die maximale Größe dieser Materialstücke im Wesentlichen davon abhängig, wie groß die Extruderschnecke ist, die in diesem Verfahren zur Anwendung kommt. Der Materialstrom, bestehend aus dem Fasern enthaltenden Werkstoff und dem thermoplastischen Polymer, wird mindestens einer Extruderschnecke zugeführt, in der dieses Material erhitzt und gepresst wird. Auf diese Weise wird das Polymer in einen plastifizierten Zustand versetzt, so dass es leicht geformt werden kann. Vorzugsweise wird der Fasern enthaltende Werkstoff dem bereits plastifizierten Polymer zugesetzt, um Faserbrüche durch die Extruderschnecke weitestgehend zu vermeiden. Schließlich wird das Polymer vorzugsweise durch eine Lochplatte gedrückt und abgekühlt, so dass es erstarrt. Damit erhält man ein ungeformtes, mit Fasern verstärktes Polymer, welches zur Herstellung neuer Polymerteile genutzt werden kann. Da in diesen Teilen die Fasern nicht in Vorzugsrichtung ausgerichtet und in der Regel verkürzt sind, besitzen diese nicht die Festigkeit klassischer faserverstärkter Formteile, die Festigkeit dieser Teile kommt dicht an die von mit neuen Fasern verstärkten Polymerteilen heran. Außerdem können auf diese Weise im Produktionsprozess von faserverstärkten Polymerteilen anfallende Beschnittreste sowie Altteile aufgearbeitet werden, so dass sie nicht deponiert werden müssen. Dabei ist zu berücksichtigen, dass ein Verbrennen dieser Teile in der Regel wegen der damit verbundenen toxischen Schadstoffbelastung nicht oder nur mit sehr großem Aufwand möglich ist. Durch das erfindungsgemäße Verfahren können daher Faserabfälle aufbereitet und dem Produktionsprozess für neue Teile aus diesen Materialien zugeführt werden. Damit wird ein erheblicher Beitrag zur Ressourcenschonung und Umweltentlastung geleistet. Dies ist insbesondere deshalb von hoher Bedeutung, da faserverstärkte Polymere in der industriellen Produktion vermehrt eingesetzt werden und klassische Materialien wie beispielsweise Stahl- und Aluminiumbleche zunehmend ersetzen. Für den Fall, dass der Fasern enthaltende Werkstoff in derart großen Stücken vorliegt, dass er von der mindestens einen Extruderschnecke nicht mit hinreichender Sicherheit gefördert werden kann, ist es vorteilhaft, den Werkstoff vorab in entsprechende Teile zu zerkleinern. Für die Untergrenze der mittleren Kantenlänge spielt die Verarbeitbarkeit des Fasern enthaltenden Werkstoffs keine Rolle. Diese bestimmt aber die mittlere Länge der Fasern. Daher sollte eine Mindestkantenlänge von 1 cm möglichst nicht unterschritten werden. Bei kleineren Kantenlängen wird die Stabilisierungseigenschaft der Fasern entsprechend reduziert, was zwar in bestimmten Anwendungsfällen durchaus akzeptabel erscheint, jedoch grundsätzlich nicht erwünscht ist. Im Polymer sollen sich hinreichend lange Fasern befinden. Es hat sich herausgestellt, dass mittlere Kantenlängen von wesentlich mehr als 1 cm nur noch geringfügig mehr Stabilität im faserverstärkten Polymer bewirken.

Für die Größe der Teile des Fasern enthaltenden Werkstoffs hat sich eine mittlere Kantenlänge von höchstens 10 cm bewährt, so dass diese Teile problemlos von großen Extruderschnecken gefördert werden können. Sollen auch kleinere Extruderschnecken zum Einsatz kommen können, ist eine maximale mittlere Kantenlänge von höchsten 5 cm vorzuziehen. Als mittlere Kantenlänge ist dabei die mittlere Länge der einzelnen Stücke des Fasern enthaltenden Werkstoffs in Längsrichtung der Fasern zu verstehen. Häufig fällt der Werkstoff in Form von flächigen, dünnwandigen Körpern an. In diesem Fall besitzt der Fasern enthaltende Werkstoff in Dickenrichtung eine wesentlich kürzere Kantenlänge von beispielsweise wenigen Millimetern, während die Kantenlänge in anderen Erstreckungsrichtungen wesentlich größer ist. In diesem Fall spielt die Kantenlänge in Dickenrichtung für die Ermittlung der mittleren Kantenlänge keine Rolle, da sich die Fasern nur quer zur Dickenrichtung erstrecken. In anderen Worten ausgedrückt, die mittlere Kantenlänge definiert im Wesentlichen die Länge der Fasern.

Um den Aufbereitungsprozess möglichst effizient zu gestalten, wird die Portionierung vorzugsweise in einem Wiegebehälter durchgeführt. Damit kann der Portioniervorgang gleichzeitig mit dem Wiegevorgang erfolgen, was den Materialdurchsatz im Verfahren erhöht. Damit sind der Portionier- und Wiegevorgang nicht mehr die den Durchsatz limitierenden Schritte des Aufbereitungsverfahrens, so dass die Portionsgrößen auch entsprechend verkleinert werden können. Dies führt zu einer erhöhten Vergleichmäßigung der Zusammensetzung des Materialstroms und führt damit zu einer höheren Materialgüte des mit dem Verfahren erzeugten Werkstoffs.

Wird der Fasern enthaltende Werkstoff im Wiegebehälter kontinuierlich gewogen, so kann das Wiegeergebnis auch direkt zur Portionierung genutzt werden. Dabei wird der Wiegebehälter so lange mit dem Werkstoff gefüllt, bis das ermittelte Gewicht einen vorgegebenen Grenzwert erreicht oder überschreitet.

Ein potenzielles Problem des erfindungsgemäßen Verfahrens besteht darin, dass der Fasern enthaltende Werkstoff dem Materialstrom prinzipbedingt diskontinuierlich zugeführt werden muss. Dieses Problem kann zwar durch entsprechend kleine Portionen minimiert werden, trotzdem verbleibt im Materialstrom eine ungewollte periodische Schwankung des Mischungsverhältnisses zwischen dem Werkstoff und dem thermoplastischen Polymer. Um dieses Problem zu beseitigen, wird in einer bevorzugten Ausführung der portionierte Werkstoff in mindestens einem Rohr und/oder mindestens einer Rinne vergleichmäßigt. Vorzugsweise ist das mindestens eine Rohr bzw. die mindestens eine Rinne in leichtem Gefälle angestellt, so dass sich ein kontinuierlicher und zeitlich gleichmäßiger Materialstrom einstellt. Der Massendurchsatz an Fasern enthaltendem Werkstoff entspricht dabei exakt der Portionsmasse geteilt durch die Taktzeit. Insbesondere ist daran gedacht, das Rohr und/oder die Rinne kontinuierlich oder oszillierend zur Drehung anzutreiben. Damit wird die Vergleichmäßigung des Massendurchsatzes verbessert. Zusätzlich kann im Rohr und/oder in der Rinne mindestens ein Mitnehmer vorgesehen sein, der die Durchmischung des Werkstoffs und damit die Vergleichmäßigung verbessert.

Insbesondere bei relativ groß geschnittenem Fasern enthaltenden Werkstoff hat sich herausgestellt, dass die Zufuhr zur mindestens einen Extruderschnecke relativ störanfällig ist. Insbesondere kann es immer wieder vorkommen, dass der Zulauf zur mindestens einen Extruderschnecke durch sich verkeilenden Werkstoff verstopft wird. Zur Lösung dieses Problems wird in einer weiteren bevorzugten Ausführung der Fasern enthaltende Werkstoff mit Druck der mindestens einen Extruderschnecke zugeführt. Dieser Druck kann beispielsweise durch eine entsprechend gestaltete Förderschnecke oder durch einen in einem Zylinder laufenden Kolben bereitgestellt werden. Diese Aufzählung ist jedoch nicht abschließend zu verstehen.

Nachdem der Fasern enthaltende Werkstoff zusammen mit dem thermoplastischen Polymer durch Erhöhung von Druck und Temperatur in einen plastifizierten Zustand gebracht wurde, lässt sich diese Mischung problemlos in jede beliebige Form bringen. Am Einfachsten wird dieses Material durch eine Lochplatte gepresst, so dass Stränge entstehen. Durch Zerschneiden dieser Stränge in entsprechende Teile ergibt sich ein Granulat, welches sich durch eine gute Rieselfähigkeit auszeichnet. Ein derartiges Granulat kann problemlos in Extrudern oder Spritzgussmaschinen als Rohstoff eingesetzt werden, um neue Formteile zu erstellen. Damit kann der Einsatz von neuem Rohstoff, insbesondere Polymer und Fasern, entsprechend reduziert werden. Damit ist aus einem teuer zu entsorgenden Abfall ein wertvoller Rohstoff für den industriellen Einsatz geworden.

Die Fasern des Werkstoffs können aus unterschiedlichen Materialien bestehen, wobei insbesondere an Karbon- und Glasfasern gedacht ist. Diese Fasern werden in industriellen Prozessen sehr häufig eingesetzt, da sie sich durch hohe Festigkeiten und definierte physikalische Eigenschaften auszeichnen. Daneben ist dieses Verfahren aber auch für Naturfasern geeignet, wobei insbesondere an Kokos-, Hanf- und Flachsfasern gedacht ist. Diese Aufzählung ist aber nicht abschließend zu verstehen.

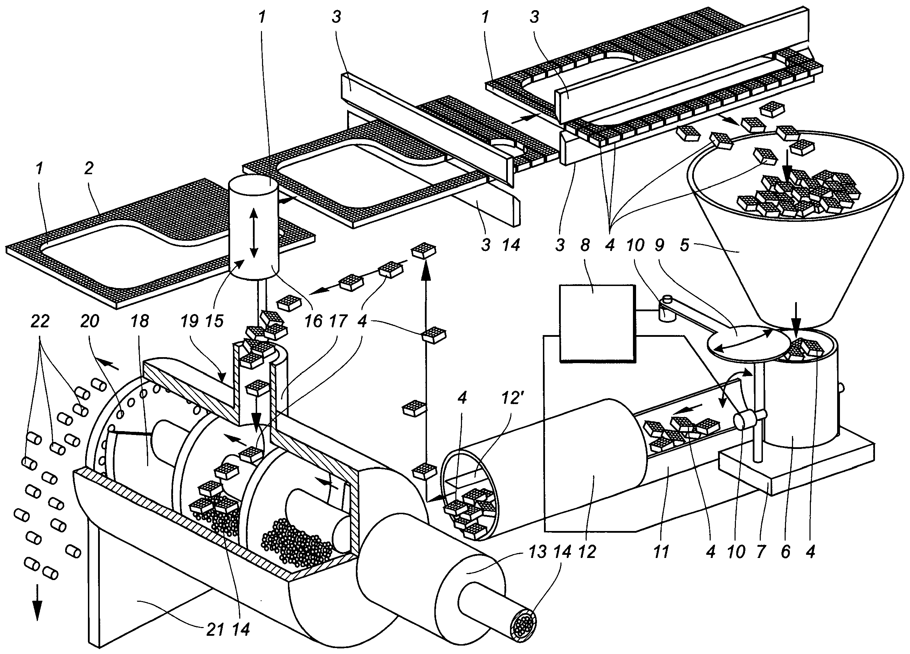

Der Erfindungsgegenstand wird beispielhaft anhand der beigefügten Zeichnung erläutert.

Die einzige Figur zeigt eine schematische Prinzipdarstellung des erfindungsgemäßen Verfahrens. Ein Werkstoff 1, welcher Fasern 2 enthält, ist lediglich beispielhaft als Beschnittrest dargestellt, wie er häufig bei der Herstellung von faserverstärkten Formteilen anfällt. Dieser Werkstoff 1 wird von Schneidmessern 3 in Teile 4 geschnitten, die eine für den folgenden Prozess geeignete mittlere Kantenlänge von beispielsweise 1 cm aufweisen. Bedingt durch eine undefinierte Formgebung des zu verarbeitenden Werkstoffs 1 fallen die Teile 4 in einem stark variierenden Massenstrom an.

Die Teile 4 werden mittels eines Trichters 5 einem Wiegebehälter 6 zugeführt. Dieser Wiegebehälter 6 ist verschwenkbar auf einer Waage 7 montiert. Die Waage 7 überwacht permanent die Masse der im Wiegebehälter 6 befindlichen Teile 4.

Sobald die im Wiegebehälter 6 enthaltene Gesamtmasse an Teilen 4 einem vorgegebenen Grenzwert im Wesentlichen entspricht oder diesen überschreitet, betätigt eine von der Waage 7 beeinflusste Steuerung 8 einen Stellmotor 10, wodurch eine Klappe 9 den Trichter 5 verschließt. Zu diesem Zeitpunkt werden dem Wiegebehälter 6 somit keine Teile 4 mehr zugeführt. Die von den Schneidmessern 3 zurechtgeschnittenen Teile 4 füllen daher im Folgenden nicht mehr den Wiegebehälter 6, sondern ausschließlich den Trichter 5, der in diesem Zusammenhang als Vorratsspeicher genutzt wird. Nach einer vorgegebenen Taktzeit betätigt nun die Steuerung 8 einen weiteren Stellmotor 10, der den Wiegebehälter 6 verschwenkt und somit die darin enthaltenen Teile 4 in eine Rinne 11 entleert. Diese Taktzeit wird von der letzten Entleerung des Wiegebehälters 6 an gemessen, so dass der Wiegebehälter 6 in im Wesentlichen periodischen, proportional zum Wiegeergebnis ermittelten Abständen entleert wird. Über die Taktzeit gemittelt wird daher dem Wiegebehälter 6 ein konstanter Massenstrom entnommen.

Die Rinne 11 ist zur Horizontalen leicht im Gefälle geneigt, so dass sich der Massenstrom aus Teilen 4 allmählich vergleichmäßigt. Im weiteren Verlauf geht die Rinne 11 in ein Rohr 12 über, welches in gleicher Weise wie die Rinne 11 geneigt ist. Grundsätzlich ist daran gedacht, statt der Verbindung von Rinne 11 und Rohr 12 auch über die gesamte Vergleichmäßigungslänge eine Rinne 11 oder ein Rohr 12 vorzusehen. Insbesondere das Rohr 12 ist drehend angetrieben, um die Vergleichmäßigung des Massenstroms zu verbessern. Zu diesem Zweck ist innerhalb des Rohres 12 ein Rührer 12' vorgesehen, der zusammen mit dem Rohr 12 umdreht und den Werkstoff durchmischt. Am Ende des Rohres 12 ergibt sich ein gleichmäßiger Massenstrom von Teilen 4, der dem von der Steuerung 8 vorgegebenen Massengrenzwert geteilt durch die Taktzeit entspricht.

Dieser Werkstoff 1 wird mittels eines Stopfers 15 - bestehend aus einem Kolben 16, der in einem Zylinder 17 verschiebbar ist - einer Extruderschnecke 18 eines Extruders 19 zugeführt. Der Extruder 19 ist teilweise geschnitten dargestellt, um die Extruderschnecke 18 sehen zu können. In den Extruder 19 mündet eingangs eine Dosierpumpe 13, mit der ein thermoplastisches Polymer 14 mit konstantem Massenstrom zugeführt wird. Das thermoplastische Polymer 14 ist hinreichend feinkörnig, so dass er mit der Dosierpumpe 13 problemlos exakt dosiert werden kann. Damit ergibt sich im Extruder 19 eine definierte Mischung zwischen dem Werkstoff 1 und dem thermoplastischen Polymer 14. Diese Extruderschnecke 18 bringt diese Mischung auf einen Druck und eine Temperatur, so dass das thermoplastische Polymer 14 in einen plastifizierten Zustand überführt wird, in dem es beliebig formbar ist. Um zu vermeiden, dass sich die Fasern 2 durch die Knetwirkung der Extruderschnecke 18 und/oder zusätzliche, nicht dargestellte Knetwerke verkürzen, werden die Teile 4 der Extruderschnecke 18 weiter stromabwärts im Verhältnis zum thermoplastischen Polymer 14 zugeführt.

Anschließend wird diese Masse durch eine Lochplatte 20 gedrückt, so dass sich Stränge ergeben, die von einem Schneidmesser 21 zu einem Granulat 22 geschnitten werden. Dieses Granulat 22 wird abgekühlt, so dass es in einen festen Zustand überführt wird. Es dient dann als Rohstoff für einen nicht dargestellten Extruder oder eine Spritzgußmaschine, um neue Formteile herzustellen.

### Bezugszeichenliste

- 1: Werkstoff
- 2: Faser
- 3: Schneidmesser
- 4: Teil
- 5: Trichter
- 6: Wiegebehälter
- 7: Waage
- 8: Steuerung
- 9: Klappe
- 10: Stellmotor
- 11: Rinne
- 12: Rohr
- 12': Rührer
- 13: Dosierpumpe
- 14: thermoplastisches Polymer
- 15: Stopfer
- 16: Kolben
- 17: Zylinder
- 18: Extruderschnecke
- 19: Extruder
- 20: Lochplatte
- 21: Schneidmesser
- 22: Granulat

## Patentansprüche

1. Verfahren zum Aufbereiten eines Fasern (2) enthaltenden Werkstoffs (1), bei dem der Werkstoff (1) in Teile (4) zerkleinert wird, deren mittlere Kantenlänge mindestens 1 cm beträgt, wonach der Werkstoff (1) in Portionen mit unterschiedlichen Gewichten geteilt und die Portionen gewogen werden, wobei die Portionen in Taktzeiten, die direkt proportional zum ermittelten Gewicht der Portionen sind, mindestens einer Extruderschnecke (18) zugeführt werden, der außerdem mindestens ein Massenstrom eines thermoplastischen Polymers (14) zugeführt wird, welches erhitzt und gepresst wird, um das thermoplastische Polymer (14) in einen plastifizierten Zustand zu versetzen, wobei der Fasern (2) enthaltende Werkstoff (1) dem thermoplastischen Polymer (14) vorzugsweise im plastifizierten Zustand zugesetzt wird, wonach die Mischung nach Verlassen des Extruders (19) wieder erstarrt.

2. Verfahren nach Anspruch 1, **dadurch gekennzeichnet, dass** die Teile (4) eine mittlere Kantenlänge von höchstens 10 cm, oder höchstens 5 cm aufweisen.

3. Verfahren nach Anspruch 1 oder 2, **dadurch gekennzeichnet, dass** die Portionierung in mindestens einem Wiegebehälter (6) erfolgt.

4. Verfahren nach Anspruch 3, **dadurch gekennzeichnet, dass** dem mindestens einen Wiegebehälter (6) der Fasern (2) enthaltende Werkstoff (1) so lange zugeführt wird, bis das ermittelte Gewicht einen vorgegebenen Grenzwert erreicht oder überschreitet.

5. Verfahren nach mindestens einem der Ansprüche 1 bis 4, **dadurch gekennzeichnet, dass** der portionierte Fasern (2) enthaltende Werkstoff (1) in mindestens einem Rohr (12) und/oder mindestens einer Rinne (11) vergleichmäßigt wird.

6. Verfahren nach mindestens einem der Ansprüche 1 bis 5, **dadurch gekennzeichnet, dass** der Fasern (2) enthaltende Werkstoff (1) mit Druck der mindestens einen Extruderschnecke (18) zugeführt wird.

7. Verfahren nach Anspruch 6, **dadurch gekennzeichnet, dass** das plastifizierte Polymer (1) zusammen mit den Fasern (2) enthaltende Werkstoff (1) zu einem Granulat (22) geformt und/oder geschnitten wird.

8. Verfahren nach mindestens einem der Ansprüche 1 bis 7, **dadurch gekennzeichnet, dass** die Fasern (2) aus Karbon, Glas und/oder Naturfasern bestehen.

## Claims

1. Method for conditioning a material (1) containing fibres (2), in which the material (1) is comminuted into parts (4) of which the mean edge length is at least 1 cm, whereupon the material (1) is divided into portions of dissimilar weights and the portions are weighed, wherein the portions are fed to at least one extruder screw (18) at cycle rates which are directly proportional to the determined weight of the portions, said extruder screw (18) being moreover fed a mass flow of a thermoplastic polymer (14) which is heated and compressed in order for the thermoplastic polymer (14) to be rendered in a plasticized state, wherein the material (1) containing fibres (2) is added to the thermoplastic polymer (14) preferably in the plasticized state, whereupon the mixture solidifies again upon leaving the extruder (19).

2. Method according to Claim 1, **characterized in that** the parts (4) have a mean edge length of at most 10 cm, or at most 5 cm.

3. Method according to Claim 1 or 2, **characterized in that** the portioning is performed in at least one weighing container (6).

4. Method according to Claim 3, **characterized in that** the material (1) containing fibres (2) is fed to the at least one weighing container (6) until the determined weight reaches or exceeds a predefined limit value.

5. Method according to at least one of Claims 1 to 4, **characterized in that** the portioned material (1) containing fibres (2) is homogenized in at least one tube (12) and/or at least one channel (11).

6. Method according to at least one of Claims 1 to 5, **characterized in that** the material (1) containing fibres (2) is fed under pressure to the at least one extruder screw (18).

7. Method according to Claim 6, **characterized in that** the plasticized polymer (1) conjointly with the material (1) containing fibres (2) is shaped and/or cut so as to form a granulate (22).

8. Method according to at least one Claims 2 to 7, **characterized in that** the fibres (2) are composed of carbon, glass, and/or natural fibres.

## Revendications

1. Procédé de traitement d'un matériau (1) contenant des fibres (2), procédé dans lequel le matériau (1) est brisé en fragments (4) dont la longueur de bord moyenne est d'au moins 1 cm, puis le matériau (1) est divisé en portions de poids différents et les portions sont pesées, les portions étant amenées dans des temps de cycle directement proportionnels au poids déterminé des portions, à au moins une vis d'extrudeuse (18) à laquelle est également amené au moins un flux massique d'un polymère thermoplastique (14) qui est chauffé et pressé pour mettre le polymère thermoplastique (14) à l'état plastifié, le matériau (1) contenant des fibres (2) étant ajouté au polymère thermoplastique (14) de préférence à l'état plastifié, après quoi le mélange se solidifie à nouveau après avoir quitté l'extrudeuse (19) .

2. Procédé selon la revendication 1, **caractérisé en ce que** les fragments (4) ont une longueur de bord moyenne de 10 cm maximum ou de 5 cm maximum.

3. Procédé selon la revendication 1 ou 2, **caractérisé en ce que** la mise en portions est effectuée dans au moins un récipient de pesée (6).

4. Procédé selon la revendication 3, **caractérisé en ce que** le matériau (1) contenant des fibres (2) est amené à l'au moins un récipient de pesée (6) jusqu'à ce que le poids déterminé atteigne ou dépasse une limite prédéterminée.

5. Procédé selon l'une au moins des revendications 1 à 4, **caractérisé en ce que** le matériau (1) contenant des fibres (2), qui a été mis en portions, est homogénéisé dans au moins un tube (12) et/ou au moins une goulotte (11).

6. Procédé selon l'une au moins des revendications 1 à 5, **caractérisé en ce que** le matériau (1) contenant des fibres (2) est amené sous pression à l'au moins une vis d'extrudeuse (18).

7. Procédé selon la revendication 6, **caractérisé en ce que** le polymère plastifié (1) ainsi que le matériau (1) contenant des fibres (2) sont mis en forme et/ou découpés pour obtenir un granulat (22).

8. Procédé selon l'une au moins des revendications 1 à 7, **caractérisé en ce que** les fibres (2) comprennent des fibres de carbone, des fibres de verre et/ou des fibres naturelles.
